# EUROPEAN PATENT SPECIFICATION

(11) **EP 0 668 194 B1**
(45) Date of publication and mention of the grant of the patent: **16.12.1998**
(21) Application number: 95102269.8
(22) Date of filing: 17.02.1995
(51) Int. Cl.: B60R 21/02, B60K 28/04

(54) **Hall effect sensor assembly**
Hall-Sensoranordnung
Assemblage d'un capteur à effet hall

(30) Priority: 18.02.1994 US 198847; 22.02.1994 US 199827; 18.02.1994 US 198957; 22.02.1994 US 199120
(43) Date of publication of application: 23.08.1995
(73) Proprietor: Clark Equipment Company, South Bend Indiana 46634 (US)
(72) Inventor: Jacobson, Scott B., Kindred, North Dakota 58051 (US); Brandt, Kenneth A., Fargo, North Dakota 58103 (US)
(74) Representative: VOSSIUS & PARTNER

(56) References cited:
- US-A- 4 389 154
- US-A- 4 909 560
- US-A- 4 955 452

## Description

The present invention relates to power machinery. More particularly, the present invention relates to a Hall effect sensor assembly for use in controlling operation of power machinery.

Power machines, such as skid steer loaders, typically have a frame which supports a cab and a movable lift arm which, in turn, supports a work tool such as a bucket. The movable lift arm is pivotally coupled to the frame of the skid steer loader by power actuators which are commonly hydraulic cylinders. In addition, the tool is coupled to the lift arm by one or more additional power actuators which are also commonly hydraulic cylinders. An operator manipulating the skid steer loader raises and lowers the lift arm, and manipulates the tool, by actuating the hydraulic cylinders coupled to the lift arm, and the hydraulic cylinder coupled to the tool. When the operator causes the hydraulic cylinders coupled to the lift arm to increase in length, the lift arm moves generally vertically upward. Conversely, when the operator causes the hydraulic cylinders coupled to the lift arm to decrease in length, the lift arm moves generally vertically downward. Similarly, the operator can manipulate the tool (e.g., tilt the bucket) by controlling the hydraulic cylinder coupled to the lift arm and the working tool to increase or decrease in length, as desired.

Skid steer loaders also commonly have an engine which drives a hydraulic pump to, in turn, power hydraulic traction motors which power movement of the skid steer loader. The traction motors are commonly coupled to the wheels through a drive mechanism such as a chain drive.

It is desirable that, under certain circumstances, the lift arm and the tool, or the drive mechanism, or both, be rendered inoperable. For example, in some prior devices, when an operator moves out of proper operating position in the cab of the skid steer loader, the hydraulic cylinders used to raise and lower the lift arm are locked out of operation. In such prior devices, an operator presence switch is coupled to the hydraulic circuit controlling the hydraulic cylinders to render the hydraulic lift cylinders inoperable when the operator presence switch indicates that the operator is out of proper operating position. One example of such a system is set out in the Minor et al US-A-4 389 154.

In addition, in some prior devices, movable operator restraint bars are provided. When the operator restraint bars are moved to a retracted or inoperative position, mechanical brakes or wheel locks lock the wheels of the skid steer loader. One example of such a system is set out in the Simonz US-A-4 955 452.

According to the present invention, a sensor for a power machine includes a seat bar which is coupled for movement relative to a seat on the power machine. A magnet and a Hall effect sensor are coupled to the seat bar and to the power machine so that they are movable relative to one another based on movement of the seat bar. The seat bar is pivotally movable from a first position to a second position. The Hall effect sensor provides a position sensing signal indicating when the seat bar is in one of the first or second positions.

In another preferred embodiment, a Hall effect sensor assembly is also implemented as a seat sensor. The seat is movable between an occupied position and an unoccupied position. A magnet and a Hall effect sensor are attached to the seat and the power machine so that they move relative to one another when the seat moves between the occupied and unoccupied positions. The Hall effect sensor provides an output signal indicative of seat position.

The invention is described in detail in connection with the drawings in which:
FIG. 1 is a side elevational view of a skid steer loader of the present invention.
FIG. 2 is a block diagram of a control system of the present invention.
FIG. 3 is an exploded view of a Hall effect sensor assembly for the operator bar of the present invention.
FIG. 3A shows the Hall effect sensor assembly of FIG. 3 assembled.
FIG. 4 is a side sectional view of a Hall effect sensor assembly used as a seat sensor according to the present invention.
FIG. 4A is a bottom sectional view along section lines 4A-4A shown in FIG. 4.

### Overview

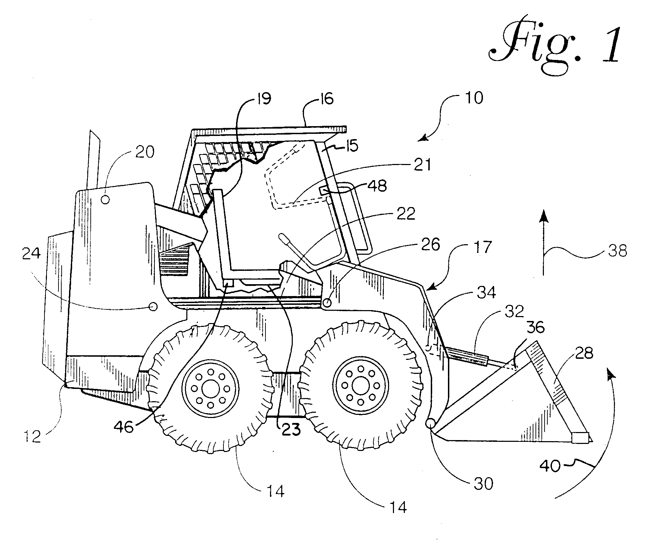

FIG. 1 is a side elevational view of a skid steer loader 10 of the present invention. Skid steer loader 10 includes a frame 12 supported by wheels 14. Frame 12 also supports a cab 16 which defines an operator compartment and which substantially encloses a seat 19 on which an operator sits to control skid steer loader 10. Cab 16 includes uprights 15. A seat bar 21 is pivotably coupled to a front portion of cab 16. When the operator occupies seat 19, the operator then pivots seat bar 21 from the raised position (shown in phantom in FIG. 1) to the lowered position shown in FIG. 1.

A lift arm 17 is coupled to frame 12 at pivot points 20 (only one of which is shown in FIG. 1, the other being identically disposed on the opposite side of loader 10). A pair of hydraulic cylinders 22 (only one of which is shown in FIG. 1) are pivotally coupled to frame 12 at pivot points 24 and to lift arm 17 at pivot points 26. Lift arm 17 is also coupled to a working tool which, in this preferred embodiment, is a bucket 28. Lift arm 17 is pivotally coupled to bucket 28 at pivot points 30. In addition, another hydraulic cylinder 32 is pivotally coupled to lift arm 17 at pivot point 34 and to bucket 28 at pivot point 36. While only one cylinder 32 is shown, it is to be understood that any desired number of cylinders could be used to work bucket 28 or any other suitable tool.

The operator residing in cab 16 can manipulate lift arm 17 and bucket 28 by selectively actuating hydraulic cylinders 22 and 32. By actuating hydraulic cylinders 22 and causing hydraulic cylinders 22 to increase in length, the operator moves lift arm 17, and consequently bucket 28, generally vertically upward in the direction indicated by arrow 38. Conversely, when the operator actuates cylinder 22, causing it to decrease in length, bucket 28 moves generally vertically downward to the position shown in FIG. 1.

The operator can also manipulate bucket 28 by actuating cylinder 32. When the operator causes cylinder 32 to increase in length, bucket 28 tilts forward about pivot points 30. Conversely, when the operator causes cylinder 32 to decrease in length, bucket 28 tilts rearward about pivot points 30. The tilting is generally along an arcuate path indicated by arrow 40.

FIG. 1 also shows that seat 19 is movably coupled to frame 12 by leaf spring 23. Leaf spring 23 has sufficient tension such that seat 19 is biased upwardly into an unoccupied position when the operator is not sitting on seat 19. Also, seat 19 is lowered into an occupied position when the operator sits on seat 19.

FIG. 1 further shows, in block diagram form, a pair of sensors 46 and 48. Seat sensor 46 is coupled to seat 19 to detect when seat 19 moves between the occupied position and the unoccupied position. Seat bar sensor 48 is coupled to cab 16 and detects movement of seat bar 21 between the lowered position shown in FIG. 1, and the raised position shown in phantom in FIG. 1. Seat sensor 46 and seat bar sensor 48 will be described in greater detail later in the specification.

### Lockout Control Circuit 42

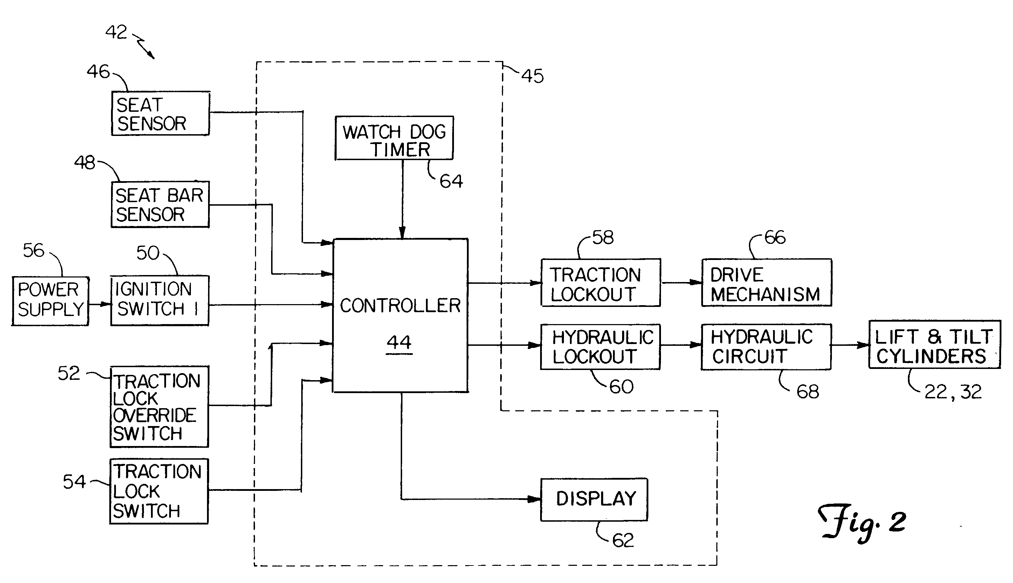

Control circuit 42 (shown in FIG. 2), in the preferred embodiment, includes controller 44 which receives inputs from seat sensor 46, seat bar sensor 48, ignition switch 50, traction lock override switch 52 and traction lock switch 54. Ignition switch 50 is coupled to a power supply 56. Upon closing of ignition switch 50, power is supplied from power supply 56 to the remainder of the system.

Based on the inputs received, controller 44 provides two outputs to traction lock mechanism 58, an output to hydraulic lock mechanism 60 and an output to display 62. Controller 44 also provides an output to watchdog timer 64 which is integrated into controller assembly 45 in the preferred embodiment.

Based on the inputs from controller 44, traction lock mechanism 58 and hydraulic lock mechanism 60 provide outputs to drive mechanism 66 and hydraulic circuit 68. Hydraulic circuit 68, in turn, provides an output to lift and tilt cylinders 22 and 32.

### Operation Of Circuit 42

In operation, seat sensor 46 senses whether seat 19 is in the raised, unoccupied position or in the lowered, occupied position, and provides a signal indicative of the position of seat 19. In the preferred embodiment, seat sensor 46 is a Hall effect sensor which is more particularly described later in the specification.

Seat bar sensor 48, in the preferred embodiment, is also a Hall effect position sensor more fully described later in the specification. Seat bar sensor 48 is activated when the operator pulls seat bar 21 into the lowered position shown in FIG. 1. In the preferred embodiment, seat bar sensor 48 provides a signal to controller 44 which is active when seat bar 21 is in the lowered position and inactive when seat bar 21 is in the raised position or in any position other than the lowered position.

Ignition switch 50 is a typical key-type ignition switch used in supplying power from power supply 56 to the basic electrical system in skid steer loader 10. Upon the closure of ignition switch 50, power is also supplied to controller 44 and it senses that switch 50 is closed.

Traction lock switch 54 is an operator-controlled pedal actuated switch accessible from the operator compartment defined by cab 16. The pedal is preferably configured as an over-center device. When the operator actuates traction lock switch 54, traction lock switch 54 provides an input to controller 44 requesting controller 44 to activate traction lock mechanism 58.

Traction lock override switch 52 is a manually operated switch which is also preferably located in the operator compartment defined by cab 16. Switch 52 can be of any suitable configuration, but is preferably a push button switch located on a dash panel in a forward region of the operator compartment.

The traction lock mechanism 58, in the preferred embodiment, comprises the mechanism more fully described in co-pending U.S. patent US 5551523 A, assigned to the same assignee as the present application. Briefly, traction lock mechanism 58 locks or unlocks drive mechanism 66 in response to input signals to either preclude movement of skid steer loader 10 or allow movement of skid steer loader 10, respectively.

Hydraulic lock mechanism 60 is more fully described in co-pending U.S. patent US 5577876 A, assigned to the same assignee as the present invention. Briefly, hydraulic circuit 68 includes hydraulic valves which are actuated to provide fluid under pressure to cylinders 22 and 32 to achieve desired manipulation of cylinders 22 and 32. Hydraulic lock mechanism 60, in the preferred embodiment, includes any number of lock valves interposed between the valves in hydraulic circuit 68 and cylinders 22 and 32. Upon receiving appropriate control signals from controller 44, the lock valves and hydraulic lock mechanism 60 preclude hydraulic circuit 68 from providing fluid under pressure to cylinders 22 and 32, thereby locking cylinders 22 and 32, or allowing only selected operations of cylinders 22.

During normal operation of circuit 42, an operator enters the operator compartment defined by cab 16 and occupies seat 19. The operator then lowers seat bar 21 into the lowered position shown in FIG. 1. The operator then closes ignition switch 50 supplying power to the basic electrical system, to controller assembly 45 and to the remainder of the control system. Seat sensor 46 and seat bar sensor 48 provide signals to controller 44 indicating that seat 19 is occupied and that seat bar 21 is in the lowered position.

Upon receiving such signals, controller 44 provides appropriate signals to traction lock mechanism 58 to unlock drive mechanism 66 and allow movement of loader 10; and to hydraulic lock mechanism 60 to unlock hydraulic circuit 68 and allow manipulation of hydraulic cylinders 22 and 32. Also, controller 44 provides display signals to display 62 which indicate that seat 19 is occupied, seat bar 21 is in the lowered position, hydraulic lock mechanism 60 has been sent a signal by controller 44 to unlock hydraulic circuit 68, traction lock mechanism 58 has been sent a signal by controller 44 to unlock drive mechanism 66 and controller 44 does not detect any system problems.

If controller 44 has not received a signal from seat sensor 46 indicating that seat 19 is occupied, and has not received a signal from seat bar sensor 48 indicating that seat bar 21 is in the down position (shown in FIG. 1) controller 44 provides appropriate signals to traction lock mechanism 58 and hydraulic lock mechanism 60 locking drive mechanism 66 and hydraulic circuit 68, respectively.

It has been observed that, during normal operation of loader 10, the operator may occasionally bounce off of seat 19. When this occurs, seat sensor 46 provides momentary signals to controller 44 indicating that seat 19 is no longer occupied. Therefore, in the preferred embodiment, once seat sensor 46 indicates that seat 19 is occupied and seat bar sensor 48 indicates that seat bar 21 is in the lowered position, controller 44 requires that seat sensor 46 provide a signal indicating that seat 19 is unoccupied for at least one second. Then, controller 44 provides an output to hydraulic lock mechanism 60 locking hydraulic circuit 68 but controller 44 does not lock drive mechanism 66. In this preferred embodiment, drive mechanism 66 remains unlocked until either seat bar 21 is lifted out of the lowered position shown in FIG. 1, or until traction lock switch 54 is actuated.

If, during operation of loader 10, the operator raises seat bar 21 to the raised position shown in phantom in FIG. 1, seat bar sensor 48 provides controller 44 with a signal indicating that seat bar 21 has been raised. Controller 44 then provides output signals to traction lock mechanism 58 to lock drive mechanism 66 and hydraulic lock mechanism 60 to lock hydraulic circuit 68.

A more detailed description of control circuit 42, including a description of the traction lock switch function, the traction lock override function and error mode operation, is set out in co-pending U.S. patent US 5425431 A, entitled INTERLOCK CONTROL SYSTEM FOR POWER MACHINE.

### Seat Bar Sensor 48

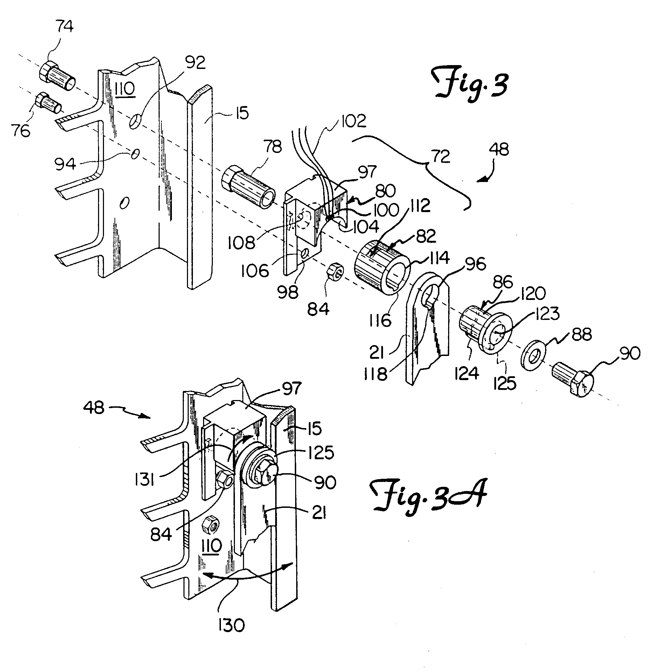

FIG. 3 shows an exploded view of seat bar sensor 48. Seat bar sensor 48 includes Hall effect sensor assembly 72 coupled to upright 15 of cab 16 and to seat bar 21. Only the portion of seat bar 21 which is pivotally coupled to upright 15 of cab 16 is shown in FIG. 3. Similarly, only a portion of upright 15 is shown for the sake of clarity.

Seat bar sensor assembly 72 includes bolts 74 and 76, sleeve 78, sensor housing 80, collar 82, nut 84, keyed shaft 86, washer 88 and bolt 90. In addition, upright 15 is provided with apertures 92 and 94, and seat bar 21 is provided with aperture 96.

Bolts 74 and 76 extend into apertures 92 and 94, respectively. Sleeve 78 has a threaded interior bore which is threadably connected to bolt 74. Sensor housing 80 includes a sensor block portion 97 and a mounting plate portion 98 which are preferably formed integrally with one another. Sensor block portion 97 houses Hall effect sensor element 100 which is connected, by conductors 102, to controller 44. Hall effect sensing element 100 is mounted in sensor block portion 97 proximate an inner hemispheric surface 104. Mounting plate 98 includes a pair of apertures 106 and 108 (shown in phantom in FIG. 3).

Once sleeve 78 is threaded onto bolt 74, aperture 108 in housing 80 slides over sleeve 78, and aperture 106 slides over bolt 76. Nut 84 is then threadably secured to bolt 76 thereby securing housing 80 to surface 110 of upright 15. Apertures 106 and 108 are aligned such that sleeve 78 extends through aperture 108 in mounting plate 98.

Collar 82 holds a magnet 112. Collar 82 is slid over the portion of sleeve 78 which protrudes beyond aperture 108 in mounting plate 98. Collar 82 includes an axial bore 114 which includes a key slot 116. Bore 114 is dimensioned to generally equal the dimensions of aperture 96 in seat bar 21. In addition, aperture 96 is provided with a key slot 118 which coincides with key slot 116 in aperture 114 of collar 82.

Keyed shaft 86 includes shaft portion 120 which has an axially disposed lip 124, and an annular ring portion 125. Axial bore 123 extends through shaft portion 120 and annular ring portion 125. The exterior perimeter of shaft portion 120 is sized just smaller than the interior perimeter of both aperture 96 and axial bore 114. In addition, lip 124 is sized to just fit within key slots 116 and 118. Therefore, once collar 82 is positioned over shaft 78, aperture 96 is aligned with bore 114 such that key slots 116 and 118 coincide. Then, shaft portion 120 of keyed shaft 86 is inserted through aperture 96 and into axial bore 114 of collar 82 so that lip 124 is disposed within key slots 116 and 118 locking seat bar 21 and collar 82 together for pivotal movement about sleeve 78.

Finally, washer 88 is positioned over annular ring portion 125 of keyed shaft 86, and bolt 90 is inserted through washer 88, into the axial bore 123 defined by shaft portion 120. Bolt 90 has a threadable shaft which is sized to threadably mate with the interior of sleeve 78. This locks the entire Hall effect sensor assembly 72 into place for pivotal movement about sleeve 78 and relative to upright 15.

FIG. 3A illustrates seat sensor 48 fully assembled. Seat bar 21 is coupled for pivotal movement relative to upright 15, about shaft 78, in the direction indicated by arrow 130. When seat bar 21 is in the lowered position, shown in FIGS. 1 and 3A, collar 82 is positioned such that magnet 112 is disposed adjacent Hall effect sensing element 100. Thus, element 100 provides a signal, via conductors 102, to controller 44 indicating that the seat bar 21 is in the lowered position. However, when the operator raises seat bar 21 to essentially any position other than the lowered position (such as the raised position shown in phantom in FIG. 1) magnet 112 rotates forward relative to sensor block 96 in the direction indicated by arrow 131 and is no longer disposed adjacent Hall effect sensing element 100. This causes the signal provided via conductors 102 to change state, indicating to controller 44 that the seat bar 21 is in a position other than the lowered position. Thus, controller 44 controls circuit 42 accordingly.

### Seat Sensor 46

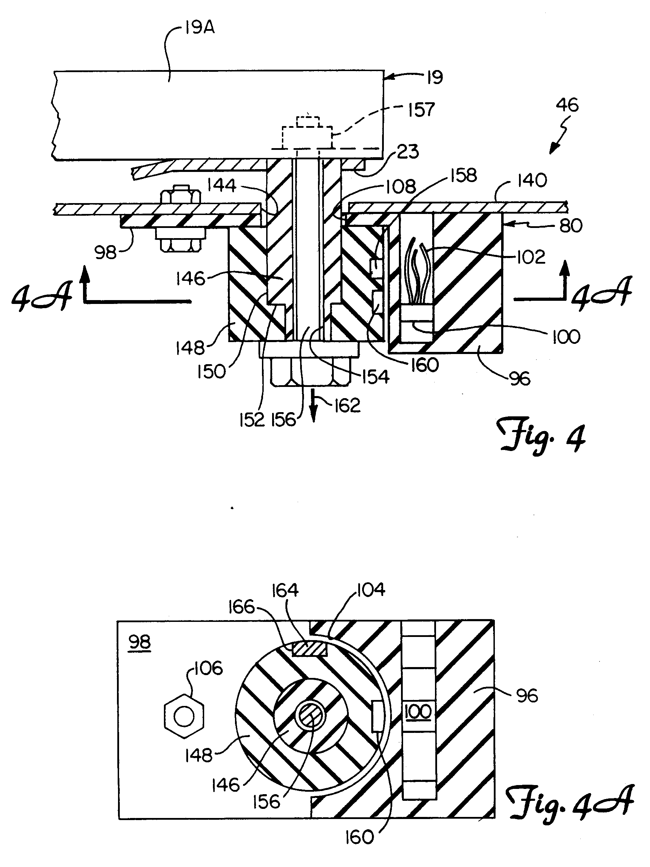

FIG. 4 is a sectional view of seat sensor 46 of the present invention. In many respects, seat sensor 46 is similar to seat bar sensor 48. Similar items are similarly numbered in FIGS. 3, 3A, 4 and 4A. FIG. 4 shows that a generally horizontal operator support portion 19A of seat 19 is movably supported above a base plate 140 by leaf spring 23. Leaf spring 23 is described in greater detail in co-pending U.S. Patent US 5542493 A, assigned to the same assignee as the present invention.

Base plate 140 includes an aperture 144 which is dimensioned similar to aperture 108 in mounting plate 98 of Hall effect sensor housing 80. A sleeve 146, dimensioned to fit within apertures 108 and 144, extends from a lower portion of seat 19, through leaf spring 23, through apertures 108 and 144, and out sensor block portion 97 in housing 80. A magnet supporting bushing 148 has an inner bore 150 which is sized just larger than the exterior surface of sleeve 146. Sleeve 146 has a stepped outer surface 152 which coincides with a stepped inner surface of axial bore 150. Sleeve 146, in turn, has an axial bore 154 extending therethrough. A bolt 156 extends through axial bore 154 and is threadably and securely connected within seat 19 at threaded receiving aperture 157 in seat 19.

A pair of oppositely polarized magnets 158 and 160 are supported within bushing 148 adjacent surface 104 of housing 80. From this arrangement, it can be seen that sleeve 146, bushing 148, magnets 158 and 160, and bolt 156 are all securely and rigidly coupled to seat 19 and leaf spring 23. However, they are movable, with movement of sleeve 146 through apertures 108 and 144, relative to base plate 140 and Hall effect sensor block portion 97.

In the preferred embodiment shown in FIGS. 4 and 4A, when seat 19 is unoccupied, or when the operator is in an improper operating position off of seat 19, leaf spring 23 biases seat 19 in the upward direction so that bushing 148 is in the position shown in FIG. 4 with a first pole of magnet 160 (i.e., north or south) adjacent Hall effect sensor element 100. When bushing 148 is in this position, Hall effect sensing element 100 provides controller 44 with a signal via conductors 102 which indicates that either seat 19 is unoccupied, or the operator is in an improper operating position.

However, when sufficient weight is applied to seat 19, seat 19, and consequently bushing 148, move downward in the direction indicated by arrow 162. This causes magnet 160 to move away from Hall effect sensing element 100, and causes a pole of magnet 158 (opposite the first pole of magnet 160) to move into a position directly adjacent Hall effect sensing element 100. The opposite polarization of magnets 158 and 160 cause Hall effect sensing element 100 to be subjected to a large change in the field strength of the magnetic field influencing Hall effect sensing element 100. This causes element 100 to quickly provide an output signal via conductors 102 to controller 44 indicating that the operator has resumed occupancy in seat 19. Controller 44 then controls the remainder of circuit 42 in the appropriate fashion.

FIG. 4A shows another feature of seat sensor 46 of the present invention. In the preferred embodiment, mounting plate 98 is provided with a key tab 164. In addition, bushing 148 is provided with a key slot 166. Key slot 166 is sized to slide over key tab 164 so that movement is possible between the seat occupied position (in which magnet 158 is disposed adjacent Hall effect sensing element 100) and the seat unoccupied position shown in FIG. 4. However, the arrangement of key tab 164 and key slot 166 precludes bushing 148 from rotating about sleeve 146 in which case magnets 158 and 160 would be out of alignment with Hall effect sensing element 100.

### Conclusion

The present invention provides a new and advantageous Hall effect sensor assembly for use on a skid steer loader. The Hall effect sensor assembly can be used, in large part, as both the seat sensor 46 and the seat bar sensor 48. The seat bar sensor 48 is provided such that the magnets in the assembly are mounted for pivotal movement relative to the Hall effect sensing element with movement of the seat bar 21 relative to the seat 19. In the seat sensor configuration, the sensor assembly includes two oppositely polarized magnets disposed proximate the Hall effect sensing element 100. When the seat 19 is in the occupied position, one of the magnets is positioned such that its magnetic field influences the Hall effect sensing element 100. When the seat is in the unoccupied position, the other oppositely polarized magnet is positioned such that its magnetic field influences the Hall effect sensing element 100. This arrangement provides for a versatile and cost effective sensor assembly.

It should be noted that, in the preferred embodiment, the entire length of movement of the bushing 148 in seat sensor 46 is approximately 5.0 to 7.6 mm (0.2 to 0.3 inches). A minimum of 0.5 volts differential in output is preferably provided by the Hall effect sensing element when indicating that the seat is in the occupied and unoccupied positions.

It should also be noted that the conductors 102 connected between the Hall effect sensing element 100 and controller 44 include a three-wire connection which is polarity protected in reference to the power and ground supply terminals. In addition, the conductors 102 are short circuit protected and are configured in a known manner so as not to be damaged by an open circuit connection.

Also, in seat bar sensor 48, magnet 112 is positioned in bushing 148 (which is preferably plastic). Hall effect sensing element 100 is preferably located above the bushing 148 on upright 15. This preferred positioning on loader 10 provides certain advantages in operation. When the seat bar 21 is rotated downward, the magnet 112 is located directly below the sensing element 100. As the seat bar 21 is rotated up, the magnet 112 approaches the front of the cab 16 which draws the magnetic field from the sensing element 100, and this assists in changing the output of the sensing element 100. As with seat sensor 46, a minimum of 0.5 volts differential in output is preferred in the output signal from sensing element 100. The seat bar sensor 48 is also preferably a three-wire device with wires to the Hall effect sensing element 100 polarity protected in reference to the power and ground supply terminals. The conductors are also short circuit protected and configured in a known manner so as not to be damaged by an open circuit connection.

Although the present invention has been described with reference to preferred embodiments, workers skilled in the art will recognize that changes may be made in form and detail without departing from the terms of the claims.

## Claims

1. A sensor on a power machine (10) having a seat (19), the sensor comprising:
a seat bar (21) mounted to the power machine (10) for pivotal movement relative to the power machine (10) between a first position and a second position; characterized by
a first Hall effect sensor assembly (72) coupled to the power machine (10) and the seat bar (21) to sense movement of the seat bar (21) between the first and second positions.

2. The sensor of claim 1 wherein the first Hall effect sensor assembly (72) comprises:
a magnet (112);
a Hall effect sensor (100); and
wherein the magnet (112) is coupled to one of the power machine (10) and the seat bar (21) and wherein the Hall effect sensor (100) is connected to the other of the power machine (10) and the seat bar (21) so the magnet (112) and Hall effect sensor (100) are moveable relative to one another as the seat bar (21) pivots between the first and second positions, the Hall effect sensor (100) sensing movement of the magnet (112) to detect movement of the seat bar (21).

3. The sensor of claim 2 wherein the first Hall effect sensor assembly (72) comprises:
a magnet housing coupled to the seat bar (21), the magnet (112) being supported by the magnet housing; and
the Hall effect sensor being coupled to the frame proximate the magnet housing so the Hall effect sensor (100) senses when the seat bar (21) is in the first position based on a position of the magnet (112).

4. The sensor of claim 3 wherein the seat bar (21) is pivoted closer to the seat (19) when in the first position than when in the second position, and wherein the magnet (112) is located on the magnet housing so the magnet (112) is proximate the Hall effect sensor (100) when the seat bar (21) is in the first position and so the magnet (112) is pivoted away from the Hall effect sensor (100) when the seat bar (21) is in the second position.

5. The sensor of claim 4 wherein the power machine (10) includes a frame (12) and wherein the magnet (112) is mounted so the frame (12) attracts a magnetic field provided by the magnet (112) when the seat bar (21) is pivoted to the second position.

6. The sensor of any of claims 3, 4 or 5, wherein the magnet housing comprises a plastic bushing, and wherein the Hall effect sensor (100) comprises a sensing element housed in a housing (80) having a generally hemispherically concave outer surface, the bushing being mounted for rotational movement adjacent the outer surface.

7. An apparatus for controlling operation of a skid steer loader having a frame, wheels (14) supporting the frame (12), a drive mechanism (66) for driving the wheels (14), a lift arm structure (17) manipulated by power actuators (22), and a power circuit (68) for controlling the power actuators (22), the apparatus comprising the sensor according to any of claims 1 to 6, and further comprising :
a second Hall effect sensor assembly (46), coupled to the sea (19), for sensing seat position and providing an occupancy signal indicative of the seat position;
a controller (44), coupled to the first Hall effect sensor assembly (72) and the second Hall effect sensor assembly (46), for providing a traction output signal, a power output signal, and a display output signal, based on the seat bar sensor signal and the occupancy signal;
traction lock means (58), coupled to the drive mechanism (66) and the controller (44), for locking the drive mechanism (66) to preclude the drive mechanism (66) from driving the wheels based on the traction output signal;
power lock means (60), coupled to the power circuit (68) and the controller (44), for locking out operation of the power actuators (22) based on the power output signal; and
display means (62), coupled to the controller (44), for displaying indicia indicative of an operational state based on the display output signal.

8. The apparatus of claim 7 wherein the seat (19) is moveable between an occupied position and an unoccupied position, and wherein the second Hall effect sensor assembly (46) comprises:
a magnet housing coupled to the seat;
a first magnet (160), having a first and a second pole and being supported by the magnet housing;
a second magnet (158), having a first and second pole and being supported by the magnet housing; and
a Hall effect sensor (100) coupled to the frame proximate the magnet housing so that the first magnet (160) is sensed by the Hall effect sensor when the seat is in the unoccupied position and so the second magnet (158) is sensed by the Hall effect sensor when the seat is in the occupied position.

9. The apparatus of claim 8 wherein the first and second magnets (158, 160) each have a north pole and a south pole and wherein the first and second magnets (158, 160) are arranged on the magnet housing so that one of the north and south poles of the first magnet (160) is proximate the Hall effect sensor (100) when the seat is in the unoccupied position and so that the other of the north and south poles of the second magnet (158) is proximate the Hall effect sensor (100) when the seat is in the occupied position.

## Patentansprüche

1. Sensor an einer Arbeitsmaschine (10) mit einem Sitz (19), wobei der Sensor aufweist:
eine Sitzstange (21), die an der Arbeitsmaschine (10) für eine Schwenkbewegung relativ zur Arbeitsmaschine (10) zwischen einer ersten Position und einer zweiten Position montiert ist; gekennzeichnet durch
eine erste Hall-Sensoranordnung (72), die mit der Arbeitsmaschine (10) und der Sitzstange (21) gekoppelt ist, um die Bewegung der Sitzstange (21) zwischen der ersten und der zweiten Position zu erfassen.

2. Sensor nach Anspruch 1, wobei die erste Hall-Sensoranordnung (72) aufweist:
einen Magneten (112);
einen Hall-Sensor (100); und
wobei der Magnet (112) mit einer der Vorrichtungen Arbeitsmaschine (10) bzw. Sitzstange (21) gekoppelt ist, und wobei der Hall-Sensor (100) mit der jeweils anderen der Vorrichtungen Arbeitsmaschine (10) bzw. Sitzstange (21) verbunden ist, so daß der Magnet (112) und der Hall-Sensor (100) gegeneinander beweglich sind, während sich die Sitzstange (21) zwischen der ersten und der zweiten Position dreht, wobei der Hall-Sensor (100) die Bewegung des Magneten (112) erfaßt, um die Bewegung der Sitzstange (21) zu erfassen.

3. Sensor nach Anspruch 2, wobei die erste Hall-Sensoranordnung (72) aufweist:
ein mit der Sitzstange (21) gekoppeltes Magnetgehäuse, wobei der Magnet (112) durch das Magnetgehäuse unterstützt wird; und
wobei der Hall-Sensor mit dem Rahmen in unmittelbarer Nähe des Magnetgehäuses gekoppelt ist, so daß der Hall-Sensor (100) anhand einer Position des Magneten (112) erfaßt, wann sich die Sitzstange (21) in der ersten Position befindet.

4. Sensor nach Anspruch 3, wobei die Sitzstange (21) in der ersten Position näher zum Sitz (19) geschwenkt wird als in der zweiten Position, und wobei der Magnet (112) so am Magnetgehäuse angeordnet ist, daß der Magnet (112) in unmittelbarer Nähe des Hall-Sensors (100) angeordnet ist, wenn sich die Sitzstange (21) in der ersten Position befindet, und daß der Magnet (112) vom Hall-Sensor (100) weggeschwenkt ist, wenn sich die Sitzstange (21) in der zweiten Position befindet.

5. Sensor nach Anspruch 4, wobei die Arbeitsmaschine (10) einen Rahmen (12) aufweist, und wobei der Magnet (112) so angebracht ist, daß der Rahmen (12) ein durch den Magneten (112) erzeugtes Magnetfeld anzieht, wenn die Sitzstange (21) in die zweite Position geschwenkt wird.

6. Sensor nach einem der Ansprüche 3, 4 oder 5, wobei das Magnetgehäuse eine Kunststofflagerbuchse aufweist, und wobei der Hall-Sensor (100) ein Sensorelement aufweist, das in einem Gehäuse (80) mit einer im allgemeinen halbkugelförmig konkaven Außenfläche untergebracht ist, wobei die Lagerbuchse für eine Drehbewegung angrenzend an die Außenfläche montiert ist.

7. Vorrichtung zur Steuerung des Betriebs eines Frontschaufelladers mit einem Rahmen, mit Rädern (14), die den Rahmen (12) tragen, einem Antriebsmechanismus (66) zum Antreiben der Räder (14), einer durch Kraftstellglieder (22) betätigten Hubarmstruktur (17) und einem Energiekreis (68) zur Steuerung der Kraftstellglieder (22), wobei die Vorrichtung den Sensor nach einem der Ansprüche 1 bis 6 aufweist und ferner aufweist:
eine zweite Hall-Sensoranordnung (46), die mit dem Sitz (19) gekoppelt ist, zum Erfassen der Sitzposition und zum Bereitstellen eines Besetzt-Signals, das die Sitzposition anzeigt;
eine mit der ersten Hall-Sensoranordnung (72) und der zweiten Hall-Sensoranordnung (46) gekoppelte Steuereinrichtung (44) zum Bereitstellen eines Fahr-Ausgangssignals, eines Energie-Ausgangssignals und eines Sichtanzeige-Ausgangssignals in Abhängigkeit vom Sitzstangensensorsignal und vom Besetzt-Signal;
eine mit dem Antriebsmechanismus (66) und der Steuereinrichtung (44) gekoppelte Fahrblockiereinrichtung (58) zum Blockieren des Antriebsmechanismus (66), um in Abhängigkeit vom Fahr-Ausgangssignal zu verhindern, daß der Antriebsmechanismus (66) die Räder antreibt;
eine mit dem Energiekreis (68) und der Steuereinrichtung (44) gekoppelte Energieblockiereinrichtung (60) zum Blockieren
des Betriebs der Kraftstellglieder (22) in Abhängigkeit vom Energie-Ausgangssignal; und
eine mit der Steuereinrichtung (44) gekoppelte Sichtanzeigeeinrichtung (62), um in Abhängigkeit vom SichtanzeigeAusgangssignal Anzeichen darzustellen, die einen Betriebszustand anzeigen.

8. Vorrichtung nach Anspruch 7, wobei der Sitz (19) zwischen einer besetzten Position und einer unbesetzten Position beweglich ist, und wobei die zweite Hall-Sensoranordnung (46) aufweist:
ein mit dem Sitz gekoppeltes Magnetgehäuse;
einen ersten Magneten (160) mit einem ersten und einem zweiten Pol, der vom Magnetgehäuse getragen wird;
einen zweiten Magneten (158) mit einem ersten und einem zweiten Pol, der vom Magnetgehäuse getragen wird; und
einen Hall-Sensor (100), der in unmittelbarer Nähe des Magnetgehäuses mit dem Rahmen gekoppelt ist, so daß der erste Magnet (160) durch den Hall-Sensor erfaßt wird, wenn sich der Sitz in der unbesetzten Position befindet, und daß der zweite Magnet (158) durch den Hall-Sensor erfaßt wird, wenn sich der Sitz in der besetzten Position befindet.

9. Vorrichtung nach Anspruch 8, wobei die ersten und zweiten Magneten (158, 160) jeweils einen Nordpol und einen Südpol aufweisen und wobei die ersten und zweiten Magneten (158, 160) auf dem Magnetgehäuse so angeordnet sind, daß einer der Nord- und Südpole des ersten Magneten (160) in unmittelbarer Nähe des Hall-Sensors (100) angeordnet ist, wenn sich der Sitz in der unbesetzten Position befindet, und daß der andere von den Nord- und Südpolen des zweiten Magneten (158) in unmittelbarer Nähe des Hall-Sensors (100) angeordnet ist, wenn sich der Sitz in der besetzten Position befindet.

## Revendications

1. Détecteur sur une machine motorisée (10) comportant un siège (19), le détecteur comprenant :
une barre de siège (21) montée sur la machine motorisée (10) pour un mouvement de pivotement par rapport à la machine motorisée (10) entre une première position et une seconde position ;
caractérisé par
un premier ensemble de détecteur à effet Hall (72) couplé à la machine motorisée (10) et à la barre de siège (21) pour détecter le mouvement de la barre de siège (21) entre la première et la seconde position.

2. Détecteur selon la revendication 1, dans lequel le premier ensemble de détecteur à effet Hall (72) comprend
un aimant (112) ;
un détecteur à effet Hall (100) ;
dans lequel l'aimant (112) est accouplé à l'un des éléments parmi la machine motorisée (10) et la barre de siège (21), et dans lequel le détecteur à effet Hall (100) est connecté à l'autre des éléments parmi la machine motorisée (10) et à la barre de siege (21) de telle façon que l'aimant (112) et le détecteur à effet Hall (100) sont mobiles l'un par rapport a l'autre lorsque la barre de siège (21) pivote entre la première et la seconde position, le détecteur à effet Hall (100) détectant le mouvement de l'aimant (112) pour détecter le mouvement de la barre de siège (21).

3. Détecteur selon la revendication 2, dans lequel le premier ensemble de détecteur à effet Hall (72) comprend :
un boîtier d'aimant accouplé à la barre de siège (71), l'aimant (112) étant supporté par le boîtier d'aimant ; et
le détecteur à effet Hall étant accouplé au cadre à proximité du boîtier d'amant de telle façon que le détecteur à effet Hall (100) détecte lorsque la barre de siège (21) est dans la première position en se basant sur une position de l'aimant (112).

4. Détecteur selon la revendication 3, dans lequel la barre de siège (21) est pivotée plus proche du siège (19) lorsqu'elle est dans la première position que lorsqu'elle est des la seconde position, dans lequel l'aimant (112) est placé sur le boîtier d'aimant de telle façon que l'aimant (112) est à proximité du détecteur à effet Hall (100) lorsque la barre de siège (21) est dans la première position, et que l'aimant (112) est ainsi pivoté eu l'éloignement du détecteur à effet Hall (100) lorsque la barre de siège (21) est dans la seconde position.

5. Détecteur selon la revendication 4, dans lequel la machine motorisée (10) inclut un cadre (12), et dans lequel l'aimant (112) est monté de telle façon que le cadre (12) attire un champ magnétique fourni par l'aimant (112) quand la barre de siège (21) est pivotée vers la seconde position.

6. Détecteur selon l'une quelconque des revendications 3, 4 ou 5, dans lequel le boîtier d'aimant comprend une douille en matière plastique, et dans lequel le détecteur à effet Hall (100) comprend un élément détecteur abrité dans un boîtier (80) ayant une surface extérieure concave généralement hémisphérique, la douille étant montée pour effectuer un mouvement de rotation de façon adjacente à la surface extérieure.

7. Appareil pour commander le fonctionnement d'un chargeur à direction par ripage, comportant un châssis, des roues (14) qui supportent le châssis (12), un mécanisme d'entraînement (66) pour entraîner les roues (14), une structure à bras de levage (17) manipulée par des actionneurs de puissance (22), et un circuit de puissance (68) pour commander les actionneurs de puissance (22), l'appareil comprenant le détecteur selon l'une quelconque des revendications 1 à 6, et comprenant en outre :
un second ensemble de détecteur à effet Hall (46), accouplé au siège (19) pour détecter la position du siège et pour fournir un signal d'occupation indiquant la position du siège ;
un dispositif de commande (44) accouplé au premier ensemble de détecteur à effet Hall (42) et au second ensemble de détecteur à effet Hall (46) pour fournir un signal de sortie de traction, un signal de sortie de puissance et un signal de sortie d'affichage, en se basant sur le signal du détecteur de barre de siège et sur le signal d'occupation ;
des moyens de verrouillage de traction (68) accouplés au mécanisme d'entraînement (66) et au dispositif de commande (44) pour verrouiller le mécanisme d'entraînement (66) pour interdire au mécanisme d'entraînement (66) d'entraîner les roues en se basant sur le signal de sortie de traction ;
des moyens de verrouillage de puissance (60) accouplés au circuit de puissance (68) et au dispositif de commande (44) pour verrouiller le fonctionnement des actionneurs de puissance (22) en se basant sur le signal de sortie de puissance ; et
des moyens d'affichage (62) accouplés au dispositif de commande (44) pour afficher des indices indiquant un état de fonctionnement en se basant sur le signal de sortie d'affichage.

8. Appareil selon la revendication 7, dans lequel le siège (19) est mobile entre une position occupée et une position inoccupée, et dans lequel le second ensemble de détecteur à effet Hall (46) comprend :
un boîtier d'aimant accouplé au siège ;
un premier aimant (160) ayant un premier et un second pôle et étant supporté par le boîtier d'aimant ;
un second aimant (158) ayant un premier et un second pôle et étant supporté par le boîtier d'aimant ;
un détecteur à effet Hall (100) accouplé au cadre à proximité du boîtier d'aimant, de telle sorte que le premier aimant (160) est détecté par le détecteur à effet Hall lorsque le siège est dans la position inoccupée, et de telle façon que le second aimant (158) est détecté par le détecteur à effet Hall lorsque le siège est dans la position occupée.

9. Appareil selon la revendication 8, dans lequel le premier et le second aimant (158, 160) possèdent chacun un pôle nord et un pôle sud, et des lequel le premier et le second aimant (158, 160) sont agencés sur le boîtier d'aimant de telle façon que l'un parmi le pôle nord et le pôle sud du premier aimant (160) est à proximité du détecteur à effet Hall (100) quand le siège est dans la position inoccupée, et de sorte que l'autre parmi le pôle nord et le pôle sud du second aimant (158) est à proximité du détecteur à effet Hall (100) quand le siège est dans la position occupée.
